(19) **Europäisches Patentamt / European Patent Office / Office européen des brevets**

(11) **EP 3 381 010 B1**

(12) # EUROPEAN PATENT SPECIFICATION

(45) Date of publication and mention of the grant of the patent:
**14.04.2021 Bulletin 2021/15**

(51) Int Cl.:
*G06T 3/00* (2006.01)     *G06T 7/00* (2017.01)

(21) Application number: **16822741.1**

(22) Date of filing: **22.11.2016**

(86) International application number:
**PCT/IB2016/057032**

(87) International publication number:
**WO 2017/089953 (01.06.2017 Gazette 2017/22)**

(54) **PROCESS FOR PROCESSING MEDICAL IMAGES OF A FACE FOR RECOGNITION OF FACIAL DYSMORPHISMS**

VERFAHREN ZUR VERARBEITUNG MEDIZINISCHER BILDER EINES GESICHTS ZUR ERKENNUNG VON GESICHTSDYSMORPHIEN

PROCÉDÉ DE TRAITEMENT D'IMAGES MÉDICALES D'UN VISAGE POUR RECONNAISSANCE DE DYSMORPHIES FACIALES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **23.11.2015 IT UB20155817**

(43) Date of publication of application:
**03.10.2018 Bulletin 2018/40**

(73) Proprietors:
• **Politecnico Di Torino**
  **10129 Torino (TO) (IT)**
• **Politecnico di Milano**
  **20133 Milano (IT)**

(72) Inventors:
• **BONACINA, Luca**
  **20832 Desio (MB) (IT)**
• **CONTI, Daniele**
  **27030 Palestro (PV) (IT)**
• **FROIO, Antonio**
  **10145 Torino (TO) (IT)**
• **VEZZETTI, Enrico**
  **10080 Salassa (TO) (IT)**
• **MARCOLIN, Federica**
  **10137 Torino (IT)**

(74) Representative: **Metroconsult Srl**
  **Via Sestriere, 100**
  **10060 None (TO) (IT)**

(56) References cited:
**US-A1- 2005 245 825**

• **SANDRO MOOS ET AL: "Cleft lip pathology diagnosis and foetal landmark extraction via 3D geometrical analysis", INTERNATIONAL JOURNAL ON INTERACTIVE DESIGN AND MANUFACTURING (IJIDEM), 21 November 2014 (2014-11-21), XP055288538, Paris ISSN: 1955-2513, DOI: 10.1007/s12008-014-0244-1**
• **JEREMIE ANQUEZ ET AL: "Automatic Segmentation of Antenatal 3-D Ultrasound Images", IEEE TRANSACTIONS ON BIOMEDICAL ENGINEERING, IEEE SERVICE CENTER, PISCATAWAY, NJ, USA, vol. 60, no. 5, 1 May 2013 (2013-05-01), pages 1388-1400, XP011500382, ISSN: 0018-9294, DOI: 10.1109/TBME.2012.2237400**
• **SHAOLEI FENG ET AL: "Automatic fetal face detection from ultrasound volumes via learning 3D and 2D information", 2009 IEEE CONFERENCE ON COMPUTER VISION AND PATTERN RECOGNITION : CVPR 2009 ; MIAMI [BEACH], FLORIDA, USA, 20 - 25 JUNE 2009, IEEE, PISCATAWAY, NJ, 20 June 2009 (2009-06-20), pages 2488-2495, XP031607054, ISBN: 978-1-4244-3992-8**

**(Cont. next page)**

• Adfa: "Advanced Computational Methodologies for Fetus Face Reconstruction and Analysis from Obstetric Ultrasound", , 1 January 2011 (2011-01-01), 25 July 2016 (2016-07-25), XP055290940, Retrieved from the Internet: URL:http://paginas.fe.up.pt/~tavares/downl oads/publications/relatorios/PI_Margarida_ Gomes.pdf [retrieved on 2016-07-25]

• ENRICO VEZZETTI ET AL: "DIAGNOSING CLEFT LIP PATHOLOGY IN 3D ULTRASOUND: A LANDMARKING-BASED APPROACH", IMAGE ANALYSIS AND STEREOLOGY, vol. 35, no. 1, 4 July 2014 (2014-07-04), page 53, XP055288532, SI ISSN: 1580-3139, DOI: 10.5566/ias.1339

**Description**

The present invention relates to the processing of images, in particular to the processing of medical images for recognition of features of a face.

More specifically, the present invention relates to a process for processing medical images of a face for recognition of facial dysmorphisms, in accordance with the preamble of claim 1, as well as to a processing system and a computer program for the execution of said process.

Processes, systems and computer programs are known which are intended for recognition of parts and/or features of organs and/or tissues of the human body through analysis of digital representations of anatomical structures.

Ultrasonic scanning, CAT (Computer Axial Tomography), MRI (Magnetic Resonance Imaging) are some examples of medical imaging tools that are commonly used by doctors and operators to diagnose many pathologies. In particular, ultrasonic image processing is by far the most common method employed for prenatal diagnosis, because of its innocuous nature in comparison with radiation-based imaging techniques. In fact, fetal diseases in particular are now attracting much interest and many efforts aimed at improving the current diagnostic techniques, thus promoting the definition of early customized therapies.

The diffusion of ultrasonic three-dimensional scanning methods has therefore rapidly increased in recent years. However, at present it is mainly used as a qualitative visualization tool only.

In later years, in particular, much interest has arisen towards face image processing for the identification of facial dysmorphisms that may be related to specific pathologies, especially during the prenatal phase (see, for example, the scientific papers by Moos et al. (Moos, S., Marcolin, F., Tornincasa, S., Vezzetti, E., Violante, M. G., Fracastoro, G., Padula, F. (2017). Cleft lip pathology diagnosis and foetal landmark extraction via 3D geometrical analysis. International Journal on Interactive Design and Manufacturing (IJIDeM), 11(1), 1-18.), and by Anquez et al. (Anquez, J., Angelini, E. D., Grangé, G., & Bloch, I. (2013). Automatic segmentation of antenatal 3-d ultrasound images. IEEE Transactions on Biomedical Engineering, 60(5), 1388-1400.)). It is therefore apparent that a detailed three-dimensional model of a face, in particular a fetus' face, could be used for analyzing prenatal facial dysmorphisms.

Many algorithms and processes already exist for three-dimensional segmentation and volume extraction starting from digital images, which are mostly based on region growing techniques or deformable models, but all such systems require human intervention, e.g. for seed selection. Therefore, the image processing systems known in the art cannot execute fully automatic procedures.

As a matter of fact, one of the most important drawbacks of the medical image processing techniques currently employed for diagnostic purposes is the lack or absence of automatic image processing procedures.

In addition, it should be reminded that, particularly as concerns ultrasonic scanning, the acquisition of images is strongly affected by the presence of scattering noise that complicates the subsequent processing, thus limiting the possible applications thereof.

At present, ultrasonic image processing does not allow for a fast and effective identification of facial dysmorphisms, while radiation-based techniques do not allow for a fully automatic processing of images of patients' faces.

Moreover, the medical image processing solutions that have been proposed so far suffer from the important drawback that they make the image interpretation process particularly complex, because of the numerous surface alterations that can be attributed to artifacts in the images themselves.

It is therefore one object of the present invention to propose a process for processing medical images of a face for recognition of facial dysmorphisms which allows for a fast, effective and automatic identification of facial dysmorphisms, in particular during the prenatal phase.

It is a further object of the present invention to propose a processing system and a computer program for the execution of such a method.

This and other objects are achieved through a method for processing medical images as set out in claim 1, a system as set out in claim 8, and a computer program as set out in claim 9.

Particular embodiments are set out in dependent claims, the contents of which should be understood to be an integral part of the present description.

Further features and advantages of the invention will become apparent in the light of the following detailed description, provided by way of non-limiting example with reference to the annexed drawings, wherein:

- Figure 1 is a block diagram of the steps of the process for processing medical images according to the present invention;
- Figure 2 is a block diagram of the steps of the segmentation step of Figure 1;
- Figure 3 is a block diagram of the steps of the differential analysis step 6 of Figure 1; and
- Figure 4 is a diagram of a system for processing medical images of a face for recognition of facial dysmorphisms according to the invention.

In brief, the process according to the present invention can automatically extract three-dimensional information about a subject's face, preferably a fetus, starting from an oriented set (stack) of two-dimensional images and providing as output a mesh representation of the facial surface.

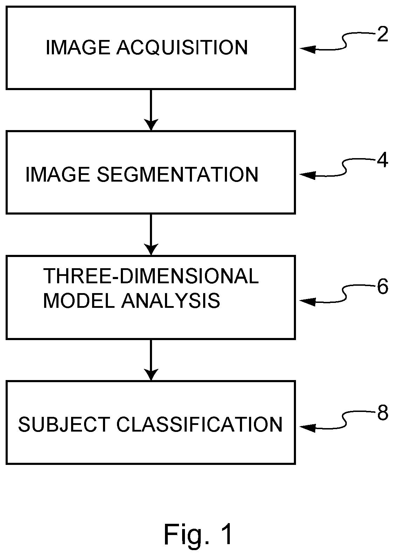

Figure 1 shows the various steps of the process for processing medical images of a face for recognition of facial dysmorphisms according to the present invention.

In the present description reference will be made, in particular, to the hare lip or cleft lip, in that this is the most widespread pathology and well represents this category; however, said process can be extended to the recognition of any other deformation of facial features, such as, for example, cleft palate, fetal alcohol syndrome, Down's syndrome, Turner's syndrome or Williams' syndrome.

The process begins at step 2 with the acquisition of a plurality of planar two-dimensional medical images (three-dimensional stack or array), e.g. in DICOM (Digital Imaging and COmmunications in Medicine) format, of a subject's face, preferably prenatal ultrasonographic images. Such images are acquired as sectional images, as known to those skilled in the art, along a predefined scan axis of a Cartesian reference system. The images of the stack comprise, in a *per se* known manner, a plurality of voxels.

The DICOM images, organized (or imported or acquired in a first direction) as a stack of planar two-dimensional images (or slices), are transformed into a three-dimensional (or N-dimensional) matrix, wherein each voxel (defined by a row index, a column index and an image number) has an associated gray intensity value related to the properties of the corresponding tissue being represented.

In the next step 4, the medical images are processed by executing a segmentation operation in order to extract a three-dimensional model.

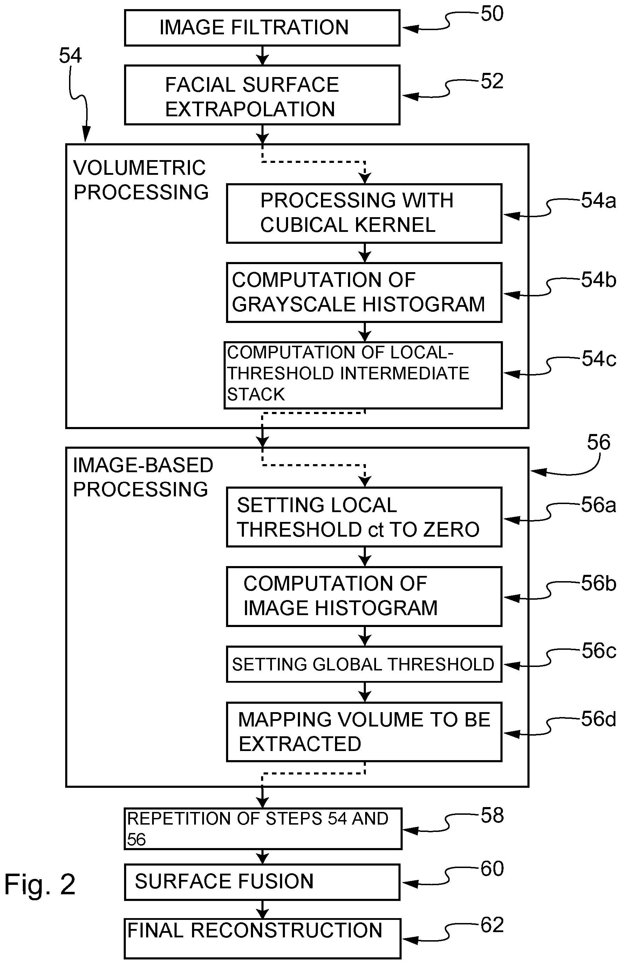

Figure 2 shows the various steps of the segmentation step 4 of Figure 1.

The segmentation 4 is a process for extracting the facial surface, through which it is possible to obtain automatically, starting from the plurality of two-dimensional images, a three-dimensional grid representing the entire face of the subject. The segmentation step 4 is based on a two-step statistical process that makes use of both volumetric histogram processing and two-dimensional segmentation.

In a first step 50 of the segmentation 4, a filtering operation is carried out, which is *per se* known, in order to remove the speckles from the images, caused by ultrasonic scattering. Preferably, a Gaussian low-pass three-dimensional filter or a Laplacian-of-Gaussian filter is used. As an alternative, the filtering can be carried out by using algorithms based on statistical analysis, PSF (Point Spread Function) inverse filters, or other filters known to a man skilled in the art.

In a subsequent step 52, a process for extrapolating the facial surface is carried out, which is based on the detection, for each DICOM image, of the face edges. This process is based on a statistical analysis of a local histogram and a three-dimensional histogram, which analysis comprises and combines a first volumetric processing step 54 and a second image-based processing step 56. During the volumetric processing 54, the whole stack of images is first processed, in a step 54a, by applying a star-shaped cubical kernel to each voxel of the entire stack which has an intensity value greater than a predetermined value t (referred to herein as sample voxels). The cubical kernel is defined as follows:

$$\mathcal{K}_l^{\mathbf{v}}(i,j,k) = \begin{cases} I(i,j,k) & (i,j,k) \in \mathcal{S}^{\mathbf{v}}(l) \subset \mathcal{C}^{\mathbf{v}}(l) \\ 0 & (i,j,k) \in \mathcal{C}^{\mathbf{v}}(l) \setminus \mathcal{S}^{\mathbf{v}}(l) \end{cases} \tag{1}$$

$$\mathcal{S}^{\mathbf{v}}(l) = \Big\{ (i,j,k) \in \mathcal{C}^{\mathbf{v}}(l) :$$

$$\big(|i-r| = |j-c| \wedge k = s\big) \vee \big(|i-r| = |k-s| \wedge j = c\big) \vee$$

$$\vee \big(|j-c| = |k-s| \wedge i = r\big) \vee \big(|i-r| = |j-c| = |k-s|\big) \vee$$

$$\vee \Big[|i-r| + |j-c| + |k-s| = max\big(|i-r|,|j-c|,|k-s|\big)\Big] \Big\}$$

$$\mathcal{C}^{\mathbf{v}}(l) = \Big\{ [r-l,r+l] \times [c-l,c+l] \times [s-l,s+l] \Big\}$$

where v = ($r$, $c$, $s$) is a generic voxel and $l$ is a parameter chosen by the user and representative of the length of half the side of the "pseudo" cubical kernel. This allows extracting:

- all the voxels belonging to the main diagonals of the cube centered on each sample voxel being examined (i.e. the cube centered on each voxel having an intensity value greater than a predetermined value $t$);
- all the voxels located on the diagonals of the three planes of a Cartesian reference system and passing through each sample voxel being examined.

At this point, in step 54b a *per se* known iterative formula is used in order to compute the grayscale histogram of the kernel and then, in step 54c, a local threshold value equal to a predetermined percentile, e.g. 10%, of said histogram is set for each voxel extracted in step 54a, thereby obtaining an intermediate stack wherein to each voxel (of those extracted in step 54) a gray intensity value is assigned which is equal to the local threshold value (intensity value).

At this point, the image-based processing 56 is carried out, i.e. volume segmentation is attained via individual segmentation of each two-dimensional image by using a global threshold technique.

In a first step 56a, for each two-dimensional image, all the local threshold values (of the voxels extracted in step 54 and belonging to said image) which are smaller than the predetermined value $t$ (e.g. a value that is very close to zero and representative of "dark" voxels) are set to zero, and then the image histogram is computed in step 56b.

Subsequently, in step 56c, for each image, a global threshold value is set for the image which is equal to a predefined value as a function of the brightest intensity that appears at least once in the image, by applying the following formula:

$$\mathcal{T}(s) = M - \left\lfloor \sigma \left( 2^N - 1 \right) \right\rceil \qquad (2)$$

where M is the maximum intensity value, $\sigma$ is the standard deviation of the intensity, and N is the number of bits of the image.

Finally, in step 56d the binary volume to be extracted (set of voxels extracted in step 54 and belonging to said image) is mapped into a new binary output image, in which each voxel is equal to either TRUE or FALSE depending on the comparison between the global threshold value and the intensity value of the single voxel taken into consideration (by applying, for example, a local thresholding formula which is *per se* known to those skilled in the art). For example, if the intensity of the voxel is greater than the global threshold value, TRUE will be set.

In this way, it is possible to determine the face edges by using voxel comparison techniques that are *per se* known to a man skilled in the art.

In a subsequent step 58, the volumetric extraction 54 (and the image-based processing 56) is repeated for two other directions orthogonal to the above-mentioned first direction (as a whole, the three-dimensional image is extracted as a stack in three co-ordinate directions). The original images in DICOM format are thus extracted as a stack in the two other directions, and the previously described steps are carried out two more times.

The surfaces thus extracted are combined in step 60, i.e. the binary values are combined together by using a *per se* known technique (data fusion).

Therefore, by combining the three binary stacks, preferably with AND logic, a combined binary stack is obtained which contains a plurality of TRUE or FALSE values.

This data fusion step improves the reliability of the process because any artifacts generated along a direction will probably no longer be generated when the acquisition direction is changed; also, the number of false positives will be reduced.

Finally, in step 62, a final reconstruction is carried out, which comprises in succession the following steps known to a man skilled in the art:

- an edge detection step: by applying a *per se* known two-dimensional edge detection algorithm (e.g. the Laplacian-of-Gaussian Marr-Hildreth algorithm) to each slice of the combined stack, a final binary stack is obtained which provides a more accurate definition of the facial surface;
- an island removal step: the whole three-dimensional image of the final stack is cleaned by removing any isolated bounds that are not connected to the main surface, thereby obtaining a cleaned final stack;
- a point cloud step: in this step, each TRUE value of the cleaned final stack represents a point of the surface; therefore, a point cloud can be obtained by simply making a full turn (looping) on the three-dimensional structure and by assigning Cartesian coordinates to each voxel that is different from FALSE (i.e. not equal to zero);
- a mesh generation step: a three-dimensional reconstruction of the cleaned final stack is carried out, thereby obtaining a three-dimensional output surface, by applying an algorithm known to those skilled in the art, such as the Poisson surface reconstruction algorithm.

The resulting vertices and faces are converted into an output file representative of the three-dimensional output surface, e.g. a PLY (Poligon File Format) three-dimensional model.

Referring back to Figure 1, in a subsequent step 6 the PLY three-dimensional model obtained during the segmentation 4 (the three-dimensional output surface) is analyzed by using differential geometry methods (geometric descriptors), so as to locate characteristic points (landmarks) which are common to all individuals (e.g. the nose tip, the boundary of the upper lip, the extremities of the eyebrows, etc.), which can therefore be used for comparing different subjects in an objective manner.

The landmarks are located automatically by constraining the ranges of values taken by the geometric descriptors. The subject's face is thus represented as a set of landmarks or points adjacent thereto by using the values taken by the geometric descriptors (and also, as an alternative, the respective positions in the three-dimensional model of the subject).

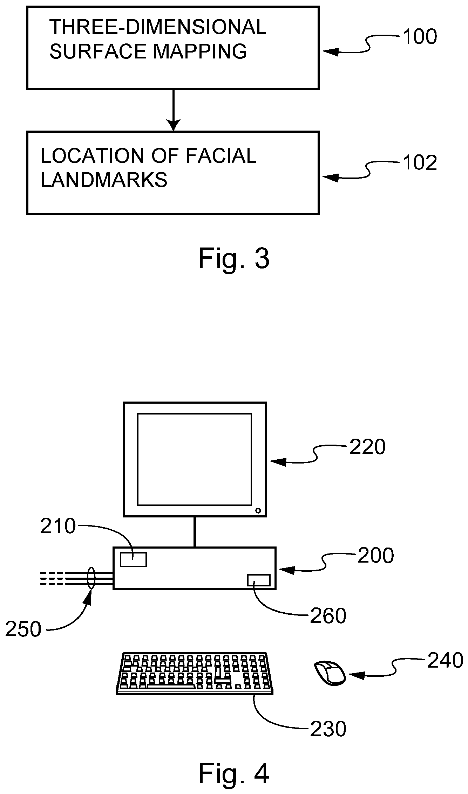

Figure 3 shows the various steps of the differential analysis step 6 of Figure 1.

The differential analysis 6 allows extracting parameters (features) that allow the identification of facial dysmorphisms, in particular for determining the cleft lip pathology. The analysis of the three-dimensional output surface via differential geometry allows extracting the landmarks, and the geometric information thus extracted is finally processed by using an unsupervised clustering algorithm *per se* known to those skilled in the art, which produces the final classification, as will be described in detail below.

The following description will first present a formalization of the differential-geometry facial description, along with the extraction of associated features for landmark location. Thereafter, the information coming from the geometric descriptors will be exploited to feed the unsupervised clustering algorithm in order to identify facial dysmorphisms, in particular the presence of a cleft lip. In a first step 100 of the differential analysis step 6, the three-dimensional output surface is mapped on a point-by-point basis with entities belonging to the differential geometry domain, which are *per se* known to those skilled in the art and referred to herein as geometric descriptors.

In particular, a predefined set of geometric descriptors is chosen, together with the first and second derivatives of the three-dimensional output surface, i.e. three coefficients of the first fundamental form, three coefficients of the second fundamental form, the Gaussian curvature K, the mean curvature H, the principal curvatures k1 and k2, the shape index S, and the curvedness index C. These geometric descriptors (or a subset thereof) are computed for each point of the three-dimensional surface and used in the subsequent landmark extraction and clustering algorithm application steps.

By calculating the geometric descriptors for a plurality of individuals (plurality of three-dimensional surfaces), a distribution of their local behaviour is obtained.

At this point, in a step 102 facial landmarks are located, which are typical facial points such as the nose tip, the nose base, and the inner and outer extremities of the eyes. This location process is made to occur automatically by setting specific empirically defined thresholds in predefined facial areas where each landmark is most likely to be found. Preferably, the nose tip and the boundary of the upper lip are located.

Referring back to Figure 1, in a step 8 each subject is classified according to the specific geometric features of the points automatically located by using the landmarks: in particular, subjects having similar geometric-morphological features are entered into the same class. This classification is carried out by optimizing a cost function known to those skilled in the art, which defines high costs for including into the same class individuals having very different morphological characteristics.

Accordingly, grouping subjects having similar characteristics into the same class is mathematically favourable and causes the algorithm to converge towards the solution: in brief, the algorithm groups the individuals, thus highlighting the presence of classes.

With the classes thus found, it is possible to assign a subject to one of such classes, thereby facilitating the next doctor's diagnosis step.

The classification 8 of the subjects is achieved by executing a clustering. Common unsupervised clustering algorithms belong to two categories: partitioning algorithms (e.g. K-means algorithms) and hierarchical clustering algorithms (e.g. Single Linkage algorithms). A preferred embodiment of the invention uses the bounded unsupervised clustering algorithm of the Depth Minimum Steiner Trees (D-MST) type.

The three-dimensional surface with the points of which the geometric descriptors are associated is entered into an N x M matrix, wherein an individual is associated with each row N (therefore, all previous steps are repeated for N individuals before arriving at the current step 104) and the columns M correspond, for each landmark or adjacent point being considered, to the number of geometric descriptors to be used for the facial description. Preferably, a plurality of geometric descriptors (preferably four) are selected, expressed in a portion of the facial surface corresponding to the area comprised between the central part of the upper lip and the nose tip (preferably an area of the face along a straight line parallel to the upper lip, from the left extremity to the right extremity thereof, centered in the upper boundary of the lip itself), so as to collect sufficient information about the possible presence of a cleft lip.

A clustering algorithm (*per se* known to those skilled in the art) is then used, which requires the definition of a dissimilarity measure to be used for a one-to-one comparison between faces, and which uses a dissimilarity matrix the elements of which represent the dissimilarity between pairs of individuals. Preferably, a dissimilarity based on the Spearman's rank correlation coefficient (rho) is used.

By applying this clustering algorithm to a database of individuals built by starting from the geometric descriptors of the above-mentioned points, a cost function is optimized which returns, in a *per se* known manner, a plurality of classes into which the faces of the various individuals thus analyzed, preferably fetuses, are entered.

In summary, once the landmark of the upper lip has been identified, it leads to identifying an area that might be concerned by a cleft lip. In particular, a region disposed horizontally (with reference to the face orientation) above the lip is taken into account. The length and width of said region must be such as to cover the lip without invading any other face regions.

A subset of the geometric descriptors of all points of that region is stored into a vector in order to build the above-mentioned N x M matrix.

The identification of the geometric descriptors, which leads to recognition of the upper lip and nose of the fetus, can be applied to other face elements for recognizing different alterations. For example, by identifying the landmarks pertaining to the eyes, the resulting N x M matrix will allow the identification of pathologies implying deformation of that region, such as, for example, the fetal alcohol syndrome or Down's syndrome.

The process according to the invention is carried out by a system of the type shown in Figure 4, which comprises a workstation 200 of a known type including a processing subsystem 210, a visualization device 220, a keyboard 230, a pointing device (mouse) 240, and a device for connection to a local network (network bus) 250. Alternatively, the processing system may be of the distributed type (not shown) and may include a processing subsystem and local or remote peripheral input/output devices.

The workstation 200 or the distributed system are arranged to operate processing groups or modules and computing programs stored in a disk 260 or accessible over a network, which can display the process described herein to show the results thereof on the device 220. These solutions are assumed to be well known to a man skilled in the art, and will not therefore be described any further herein, since they are not important for understanding and implementing the invention.

Of course, without prejudice to the principle of the invention, the embodiments and the implementation details may be extensively varied from those described and illustrated herein by way of non-limiting example, without however departing from the protection scope of the present invention as set out in the appended claims.

**Claims**

1. Automatic process for processing medical images of a face for recognition of facial dysmorphisms, comprising the steps of:

   - acquiring (2) in a first direction a plurality of two-dimensional planar medical images of a person's face, said images comprising a plurality of voxels;
   - segmenting (4) said images so as to automatically obtain a three-dimensional output surface representative of a three-dimensional model of said face;
   - analyzing (6) said three-dimensional output surface by using differential geometry methods, so as to automatically find and locate characteristic points common to the faces of all individuals;
   - classifying (8) said facial images on the basis of geometric features of said characteristic points

   wherein the step of segmenting (4) the images comprises the steps of:

   - filtering (50) the images to remove any noise from said images;
   - extrapolating (52) the facial surface by detecting, for each image, the face edges;
   - repeating (58) the extrapolation step (52) for images acquired in two other directions orthogonal to the first direction;
   - combining (60) the extrapolated surfaces to obtain a combined set of images, wherein each voxel takes a binary value;
   - reconstructing (62) the extrapolated surfaces to obtain said three-dimensional output surface, and wherein the step of extrapolating (52) the facial surface comprises the steps of:
   - processing (54a) the whole plurality of images by applying a cubical kernel defined as follows:

$$\mathcal{K}_l^{\mathbf{v}}(i,j,k) = \begin{cases} I(i,j,k) & (i,j,k) \in \mathcal{S}^{\mathbf{v}}(l) \subset \mathcal{C}^{\mathbf{v}}(l) \\ 0 & (i,j,k) \in \mathcal{C}^{\mathbf{v}}(l) \setminus \mathcal{S}^{\mathbf{v}}(l) \end{cases}$$

$$\mathcal{S}^{\mathbf{v}}(l) = \left\{ (i,j,k) \in \mathcal{C}^{\mathbf{v}}(l) : \right.$$

$$\left( |i - r| = |j - c| \wedge k = s \right) \vee \left( |i - r| = |k - s| \wedge j = c \right) \vee$$

$$\vee \left( |j - c| = |k - s| \wedge i = r \right) \vee \left( |i - r| = |j - c| = |k - s| \right) \vee$$

$$\left. \vee \left[ |i - r| + |j - c| + |k - s| = max \left( |i - r|, |j - c|, |k - s| \right) \right] \right\}$$

$$\mathcal{C}^{\mathbf{v}}(l) = \left\{ \left[ r - l, r + l \right] \times \left[ c - l, c + l \right] \times \left[ s - l, s + l \right] \right\}$$

where $v = (r, c, s)$ is a generic voxel of the images and $l$ is a predetermined parameter representative of the length of half the side of the kernel, so as to extract a subset of voxels;
- computing (54b) the histogram of the grayscale of the kernel;
- setting (54c), for each voxel of said subset of voxels, a threshold value equal to a predetermined percentile of said grayscale histogram, thereby obtaining an intermediate set of images, wherein to each voxel of said subset of voxels an intensity value is assigned which is equal to the local threshold value;
- setting (56a), for each image, all the local threshold values of the voxels of the subset of voxels lower than a predetermined value (t) equal to zero, and computing (56b) the histogram of the grayscale of each image;
- setting (56c), for each image, a predetermined global threshold value;
- mapping (56d), for each image, the voxels of said subset of voxels belonging to the image into a binary output image wherein each voxel is equal to either TRUE or FALSE depending on the comparison between the global threshold value and the intensity value of the voxel;
- determining the edges of the face by comparing the values of said voxels.

2. Process according to claim 1, wherein the global threshold value is obtained by applying the following formula:

$$\mathcal{T}(s) = M - \left\lceil \sigma \left( 2^N - 1 \right) \right\rceil$$

where M is the maximum intensity value occurring at least once in the image, $\sigma$ is the standard deviation of the intensity, and N is the number of bits of the image.

3. Process according to claim 1, wherein the reconstruction (62) of the extrapolated surfaces comprises the steps of:

- carrying out an edge detection step to obtain a set of final images with better definition of the facial surface;
- carrying out an island removal step to clean the set of final images, thus obtaining a set of cleaned final images;
- carrying out a point cloud step to assign Cartesian coordinates to each voxel of the set of cleaned final images having a predetermined binary value;
- carrying out a mesh generation step, i.e. a three-dimensional reconstruction of the set of cleaned final images, to obtain the three-dimensional output surface.

4. Process according to any one of the preceding claims, wherein the step of analyzing (6) said three-dimensional output surface by using differential geometry methods comprises the steps of:

- mapping (100) the three-dimensional output surface with geometric descriptors, said geometric descriptors being computed for each point of said three-dimensional output surface;
- locating (102) facial geometric descriptors representative of typical points of a person's face.

5. Process according to claim 4, wherein the geometric descriptors comprise three coefficients of the first fundamental form, three coefficients of the second fundamental form, the Gaussian curvature K, the mean curvature H, the principal curvatures k1 and k2, the shape index S, and the curvedness index C.

**6.** Process according to claim 4, wherein the step of classifying (8) the person comprises the step of applying a clustering algorithm to the geometric descriptors to obtain a plurality of classes as output.

**7.** Process according to any one of the preceding claims, wherein the medical images are prenatal ultrasonographic images.

**8.** System (200-260) for processing medical images of a face for recognition of facial dysmorphisms arranged to carry out a process according to any one of claims 1 to 7.

**9.** Processing computer program or computer program group executable by a processing system (200-260) and comprising one or more code modules for the execution of a process for recognition of facial dysmorphisms according to any one of claims 1 to 7.

**Patentansprüche**

**1.** Automatisches Verfahren zum Verarbeiten medizinischer Bilder eines Gesichts zur Erkennung von Gesichtsdysmorphismen, umfassend die Schritte:

- Erfassen (2) von mehreren zweidimensionalen planaren medizinischen Bildern eines Gesichts einer Person in einer ersten Richtung, wobei die Bilder mehrere Voxel umfassen;
- Segmentieren (4) der Bilder, um so automatisch eine dreidimensionale Ausgabeoberfläche zu erhalten, die repräsentativ für ein dreidimensionales Modell des Gesichts ist;
- Analysieren (6) der dreidimensionalen Ausgabeoberfläche durch Verwenden differentialgeometrischer Verfahren, um so automatisch charakteristische Punkte zu finden und zu lokalisieren, die den Gesichtern aller Individuen gemeinsam sind;
- Klassifizieren (8) der Gesichtsbilder basierend auf geometrischen Merkmalen der charakteristischen Punkte, wobei der Schritt eines Segmentierens (4) der Bilder die Schritte umfasst:

- Filtern (50) der Bilder, um jegliches Rauschen aus den Bildern zu entfernen;
- Extrapolieren (52) der Gesichtsoberfläche durch Erfassen der Gesichtskanten für jedes Bild;
- Wiederholen (58) des Extrapolationsschritts (52) für Bilder, die in zwei anderen Richtungen orthogonal zur ersten Richtung aufgenommen wurden;
- Kombinieren (60) der extrapolierten Oberflächen, um einen kombinierten Satz von Bildern zu erhalten, wobei jedes Voxel einen Binärwert annimmt;
- Rekonstruieren (62) der extrapolierten Oberflächen, um die dreidimensionale Ausgabeoberfläche zu erhalten, und wobei der Schritt eines Extrapolierens (52) der Gesichtsoberfläche die Schritte umfasst:

- Verarbeiten (54a) der gesamten mehreren Bilder durch Anwenden eines kubischen Kerns, der wie folgend definiert ist:

$$K\breve{\iota}(i,j,k) = \begin{cases} I(i,j,k) & (i,j,k) \in \breve{S}(l) \subset \breve{C}(l) \\ 0 & (i,j,k) \in \breve{C}(l) \setminus \breve{S}(l) \end{cases}$$

$$\breve{S}(l) = \{(i,j,k) \in \breve{C}(l) :$$
$$(|i-r| = |j-c| \wedge k = s) \vee (|i-r| = |k-s| \wedge j = c) \vee$$
$$\vee (|j-c| = |k-s| \wedge i = r) \vee (|i-r| = |j-c| = k-s|) \vee$$
$$\vee [|i-r| + |j-c| + |k-s| = max\ (|i-r|,|j-c|,k-s|)]\}$$

$$C^{\vee}(l) = \{[r - l, r + l] \times [c - l, c + l] \times [s - l, s + l]\}$$

wobei $v = (r,c,s)$ ein generisches Voxel der Bilder und *l* ein vorbestimmter Parameter ist, der repräsentativ für die Länge einer halben Seite des Kerns ist, um so eine Untermenge von Voxeln zu extrahieren;
- Berechnen (54b) des Histogramms der Graustufen des Kerns;
- Einstellen (54c) eines Schwellenwerts für jedes Voxel der Untermenge von Voxeln, der gleich mit einem vorbestimmten Perzentil des Graustufenhistogramms ist, wodurch ein Zwischensatz von Bildern erhalten wird, wobei jedem Voxel der Untermenge von Voxeln ein Intensitätswert zugewiesen wird, der gleich dem lokalen Schwellenwert ist;
- Einstellen (56a), für jedes Bild, aller lokalen Schwellenwerte der Voxel der Untermenge von Voxeln, die geringer als ein vorbestimmter Wert (t) sind, gleich Null, und Berechnen (56b) des Histogramms der Graustufen jedes Bilds;
- Einstellen (56c), für jedes Bild, eines vorbestimmten globalen Schwellenwerts;
- Abbilden (56d), für jedes Bild, der Voxel der Untermenge von Voxeln, die zum Bild gehören, in ein binäres Ausgangsbild, wobei jedes Voxel entweder gleich ist zu WAHR oder zu FALSCH, abhängig von dem Vergleich zwischen dem globalen Schwellenwert und dem Intensitätswert des Voxels;
- Bestimmen der Kanten des Gesichts durch Vergleichen der Werte der Voxel.

2. Verfahren nach Anspruch 1, wobei der globale Schwellenwert durch Anwenden der folgenden Formel erhalten wird:

$$T(s) = M - \lfloor \sigma (2^N - 1) \rfloor$$

wobei M der maximale Intensitätswert ist, der mindestens einmal in dem Bild vorkommt, $\sigma$ die Standardabweichung der Intensität ist und N die Anzahl der Bits des Bilds ist.

3. Verfahren nach Anspruch 1, wobei die Rekonstruktion (62) der extrapolierten Oberfläche die Schritte umfasst:

- Ausführen eines Kantendetektionsschritts zum Erhalten eines Satzes von finalen Bildern mit einer besseren Definition der Gesichtsoberfläche;
- Ausführen eines Inselentfernungsschritts zum Reinigen des Satzes von finalen Bildern, wodurch ein Satz von gereinigten finalen Bildern erhalten wird;
- Ausführen eines Punktwolkenschritts, um kartesische Koordinaten jedem Voxel des Satzes von gereinigten finalen Bildern zuzuweisen, die einen vorbestimmten Binärwert aufweisen;
- Ausführen eines Gittergenerierungsschritts, d. h. eine dreidimensionale Rekonstruktion eines Satzes von gereinigten finalen Bildern, um die dreidimensionale Ausgabeoberfläche zu erhalten.

4. Verfahren nach einem der vorhergehenden Ansprüche, wobei der Schritt des Analysierens (6) der dreidimensionalen Ausgangsoberfläche durch Verwenden differentialgeometrischer Verfahren die Schritte umfasst:

- Abbilden (100) der dreidimensionalen Ausgabeoberfläche mit geometrischen Deskriptoren, wobei die geometrischen Deskriptoren für jeden Punkt der dreidimensionalen Ausgabeoberfläche berechnet werden;
- Lokalisieren (102) gesichtsgeometrischer Deskriptoren, die repräsentativ für einen typischen Punkt eines Gesichts einer Person sind.

5. Verfahren nach Anspruch 4, wobei die geometrischen Deskriptoren drei Koeffizienten der ersten fundamentalen Form, drei Koeffizienten der zweiten fundamentalen Form, die Gaußsche-Krümmung K, die mittlere Krümmung H, die Hauptkrümmungen k1 und k2, den Formindex S und den Krümmungsindex C umfassen.

6. Verfahren nach Anspruch 4, wobei der Schritt eines Klassifizierens (8) der Person den Schritt eines Anwendens eines Cluster-Algorithmusses auf die geometrischen Deskriptoren umfasst, um mehrere Klassen als Ausgabe zu erhalten.

7. Verfahren nach einem der vorhergehenden Ansprüche, wobei die medizinischen Bilder pränatale ultrasonografische Bilder sind.

8. System (200-260) zum Verarbeiten medizinischer Bilder eines Gesichts zur Erkennung von Gesichtsdysmorphismen, das eingerichtet ist, ein Verfahren nach einem der Ansprüche 1 bis 7 auszuführen.

9. Verarbeitendes Computerprogramm oder Computerprogrammgruppe, ausführbar durch ein Verarbeitungssystem (200-260) und umfassend ein oder mehrere Codemodule für die Ausführung eines Verfahrens zum Erkennen von Gesichtsdysmorphismen nach einem der Ansprüche 1 bis 7.

**Revendications**

1. Procédé automatique pour traiter des images médicales d'un visage pour une reconnaissance de dysmorphies faciales, comprenant les étapes :

   - acquérir (2), dans une première direction, une pluralité d'images médicales planes en deux dimensions du visage d'une personne, lesdites images comprenant une pluralité de voxels ;
   - segmenter (4) lesdites images de façon à obtenir automatiquement une surface de sortie en trois dimensions représentative d'un modèle tridimensionnel dudit visage ;
   - analyser (6) ladite surface de sortie en trois dimensions en utilisant des méthodes de géométrie différentielle, de façon à trouver et localiser automatiquement des points caractéristiques communs aux visages de tous les individus ;
   - classer (8) lesdites images faciales sur la base de caractéristiques géométriques desdits points caractéristiques,

   l'étape de segmentation (4) des images comprenant les étapes :

   - filtrer (50) les images pour retirer tout bruit desdites images ;
   - extrapoler (52) la surface faciale en détectant, pour chaque image, les bords du visage ;
   - répéter (58) l'étape d'extrapolation (52) pour des images acquises dans deux autres directions orthogonales à la première direction ;
   - combiner (60) les surfaces extrapolées pour obtenir un ensemble combiné d'images, chaque voxel prenant une valeur binaire ;
   - reconstruire (62) les surfaces extrapolées pour obtenir ladite surface de sortie en trois dimensions, et l'étape d'extrapolation (52) de la surface faciale comprenant les étapes :

      - traiter (54a) l'ensemble de la pluralité d'images en appliquant un noyau cubique défini comme suit :

$$\mathcal{K}_l^{\mathbf{v}}(i,j,k) = \begin{cases} I(i,j,k) & (i,j,k) \in \mathcal{S}^{\mathbf{v}}(l) \subset \mathcal{C}^{\mathbf{v}}(l) \\ 0 & (i,j,k) \in \mathcal{C}^{\mathbf{v}}(l) \setminus \mathcal{S}^{\mathbf{v}}(l) \end{cases}$$

$$\mathcal{S}^{\mathbf{v}}(l) = \Big\{ (i,j,k) \in \mathcal{C}^{\mathbf{v}}(l) :$$
$$\big(|i-r| = |j-c| \wedge k = s\big) \vee \big(|i-r| = |k-s| \wedge j = c\big) \vee$$
$$\vee \big(|j-c| = |k-s| \wedge i = r\big) \vee \big(|i-r| = |j-c| = |k-s|\big) \vee$$
$$\vee \Big[ |i-r| + |j-c| + |k-s| = max\big(|i-r|, |j-c|, |k-s|\big) \Big] \Big\}$$

$$\mathcal{C}^{\mathbf{v}}(l) = \Big\{ [r-l, r+l] \times [c-l, c+l] \times [s-l, s+l] \Big\}$$

où v = (r, c, s) est un voxel générique des images et $l$ est un paramètre prédéterminé représentatif de la longueur de la moitié du côté du noyau, de façon à extraire un sous-ensemble de voxels ;
- calculer (54b) l'histogramme de l'échelle de gris du noyau ;
- définir (54c), pour chaque voxel dudit sous-ensemble de voxels, une valeur de seuil égale à un centile prédéterminé dudit histogramme d'échelle de gris, obtenant ainsi un ensemble intermédiaire d'images, une valeur d'intensité étant attribuée à chaque voxel dudit sous-ensemble de voxels, laquelle est égale à la valeur de seuil locale ;
- définir (56a), pour chaque image, toutes les valeurs de seuil locales des voxels du sous-ensemble de voxels de manière inférieures à une valeur prédéterminée (t) égale à zéro, et calculer (56b) l'histogramme de l'échelle de gris de chaque image ;
- définir (56c), pour chaque image, une valeur de seuil globale prédéterminée ;
- mapper (56d), pour chaque image, les voxels dudit sous-ensemble de voxels appartenant à l'image, dans une image de sortie binaire, chaque voxel étant égal soit à VRAI, soit à FAUX, en fonction de la comparaison entre la valeur de seuil globale et la valeur d'intensité du voxel ;
- déterminer les bords du visage en comparant les valeurs desdits voxels.

2. Procédé selon la revendication 1, dans lequel la valeur de seuil globale est obtenue en appliquant la formule suivante :

$$\mathcal{T}(s) = M - \left\lfloor \sigma\left(2^N - 1\right) \right\rceil$$

où M est la valeur d'intensité maximale apparaissant au moins une fois dans l'image, $\sigma$ est l'écart-type de l'intensité, et N est le nombre de bits de l'image.

3. Procédé selon la revendication 1, dans lequel la reconstruction (62) des surfaces extrapolées comprend les étapes :

- réaliser une étape de détection de bord pour obtenir un ensemble d'images finales ayant une meilleure définition de la surface faciale ;
- réaliser une étape d'élimination d'îlots pour nettoyer l'ensemble d'images finales, obtenant ainsi un ensemble d'images finales nettoyées ;
- réaliser une étape de nuage de points pour attribuer des coordonnées cartésiennes à chaque voxel de l'ensemble d'images finales nettoyées ayant une valeur binaire prédéterminée ;
- réaliser une étape de génération de maillage, c'est-à-dire une reconstruction en trois dimensions de l'ensemble d'images finales nettoyées, pour obtenir la surface de sortie en trois dimensions.

4. Procédé selon l'une quelconque des revendications précédentes, dans lequel l'étape d'analyse (6) de ladite surface de sortie en trois dimensions à l'aide de méthodes de géométrie différentielle comprend les étapes :

- mapper (100) la surface de sortie en trois dimensions avec des descripteurs géométriques, lesdits descripteurs géométriques étant calculés pour chaque point de ladite surface de sortie en trois dimensions ;
- localiser (102) des descripteurs géométriques faciaux représentatifs de points typiques du visage d'une personne.

5. Procédé selon la revendication 4, dans lequel les descripteurs géométriques comprennent trois coefficients de la première forme fondamentale, trois coefficients de la seconde forme fondamentale, la courbure gaussienne K, la courbure moyenne H, les courbures principales k1 et k2, l'indice de forme S et l'indice de courbure C.

6. Procédé selon la revendication 4, dans lequel l'étape de classement (8) de la personne comprend l'étape d'application d'un algorithme de groupement aux descripteurs géométriques pour obtenir en tant que sortie une pluralité de classes.

7. Procédé selon l'une quelconque des revendications précédentes, dans lequel les images médicales sont des images échographiques prénatales.

8. Système (200-260) pour traiter des images médicales d'un visage pour une reconnaissance de dysmorphies faciales, agencé pour mettre en œuvre un procédé selon l'une quelconque des revendications 1 à 7.

9. Groupe de programmes d'ordinateur de traitement ou programme d'ordinateur de traitement, exécutable par un système de traitement (200-260) et comprenant un ou plusieurs modules de code pour l'exécution d'un procédé de reconnaissance de dysmorphies faciales selon l'une quelconque des revendications 1 à 7.

Fig. 1

IMAGE FILTRATION — 50

FACIAL SURFACE EXTRAPOLATION — 52

54

VOLUMETRIC PROCESSING

PROCESSING WITH CUBICAL KERNEL — 54a

COMPUTATION OF GRAYSCALE HISTOGRAM — 54b

COMPUTATION OF LOCAL-THRESHOLD INTERMEDIATE STACK — 54c

IMAGE-BASED PROCESSING — 56

SETTING LOCAL THRESHOLD ct TO ZERO — 56a

COMPUTATION OF IMAGE HISTOGRAM — 56b

SETTING GLOBAL THRESHOLD — 56c

MAPPING VOLUME TO BE EXTRACTED — 56d

REPETITION OF STEPS 54 AND 56 — 58

Fig. 2

SURFACE FUSION — 60

FINAL RECONSTRUCTION — 62

```
┌─────────────────────────┐
│  THREE-DIMENSIONAL      │ ◄─── 100
│  SURFACE MAPPING        │
└─────────────────────────┘
           │
           ▼
┌─────────────────────────┐
│  LOCATION OF FACIAL     │ ◄─── 102
│  LANDMARKS              │
└─────────────────────────┘
```

## Fig. 3

## Fig. 4

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description

- **MOOS, S. ; MARCOLIN, F. ; TORNINCASA, S. ; VEZZETTI, E. ; VIOLANTE, M. G. ; FRACASTORO, G. ; PADULA, F.** Cleft lip pathology diagnosis and foetal landmark extraction via 3D geometrical analysis. *International Journal on Interactive Design and Manufacturing (IJIDeM),* 2017, vol. 11 (1), 1-18

- **ANQUEZ, J. ; ANGELINI, E. D. ; GRANGÉ, G. ; BLOCH, I.** Automatic segmentation of antenatal 3-d ultrasound images. *IEEE Transactions on Biomedical Engineering,* 2013, vol. 60 (5), 1388-1400